# EUROPEAN PATENT SPECIFICATION

(11) **EP 1 623 318 B1**
(45) Date of publication and mention of the grant of the patent: **24.02.2010**
(21) Application number: 04726598.8
(22) Date of filing: 08.04.2004
(51) Int. Cl.: G06F 9/38, G06F 9/45

(54) **PROCESSING SYSTEM WITH INSTRUCTION- AND THREAD-LEVEL PARALLELISM**
RECHNERSYSTEM MIT PARALLELITÄT AUF BEFEHLS- UND DRAHT-EBENE
SYSTÈME DE PROCESSEUR POUR L'EXPLOITATION DES PARALLELISMES ILP ET TLP

(30) Priority: 15.04.2003 EP 03101016
(43) Date of publication of application: 08.02.2006
(73) Proprietor: Koninklijke Philips Electronics N.V., 5621 BA Eindhoven (NL)
(72) Inventor: DE OLIVEIRA KASTRUP PEREIRA, Bernardo, NL-5656 AA Eindhoven (NL)
(74) Representative: Eleveld, Koop Jan
(86) International application number: PCT/IB2004/050410
(87) International publication number: WO 2004/092949

(56) References cited:
- WO-A-01/48599
- WO-A-01/67234
- KECKLER S W ET AL: "EXPLOITING FINE-GRAIN THREAD LEVEL PARALLELISM ON THE MIT MULTI-ALUPROCESSOR" PROCEEDINGS OF THE 25TH ANNUAL INTERNATIONAL SYMPOSIUM ON COMPUTER ARCHITECTURE. ISCA '98. BARCELONA, JUNE 27 - JULY 1, 1998, ANNUAL INTERNATIONAL SYMPOSIUM ON COMPUTER ARCHITECTURE, LOS ALAMITOS, CA : IEEE COMPUTER SOC, US, 27 June 1998 (1998-06-27), pages 306-317, XP000849926 ISBN: 0-8186-8492-5
- WOLFE A ET AL: "A VARIABLE INSTRUCTION STREAM EXTENSION TO THE VLIW ARCHITECTURE" COMPUTER ARCHITECTURE NEWS, ASSOCIATION FOR COMPUTING MACHINERY, NEW YORK, US, vol. 19, no. 2, 1 April 1991 (1991-04-01), pages 2-14, XP000203245 ISSN: 0163-5964
- GEHRKE W ET AL: "ASSOCIATIVE CONTROLLING OF MONOLITHIC PARALLEL PROCESSOR ARCHITECTURES" IEEE TRANSACTIONS ON CIRCUITS AND SYSTEMS FOR VIDEO TECHNOLOGY, IEEE INC. NEW YORK, US, vol. 5, no. 5, October 1995 (1995-10), pages 453-464, XP000535997 ISSN: 1051-8215
- FILLO M ET AL: "THE M-MACHINE MULTICOMPUTER" PROCEEDINGS OF THE 28TH. ANNUAL INTERNATIONAL SYMPOSIUM ON MICROARCHITECTURE. ANN ARBOR, NOV. 29 - DEC. 1, 1995, PROCEEDINGS OF THE ANNUAL INTERNATIONAL SYMPOSIUM ON MICROARCHITECTURE, LOS ALAMITOS, IEEE COMP. SOC. PRESS, US, vol. SYMP. 28, 29 November 1995 (1995-11-29), pages 146-156, XP000585356 ISBN: 0-8186-7349-4

## Description

### TECHNICAL FIELD

The technical field of this invention is processor architectures, particularly related to multi-processor systems, methods for programming said processors and compilers for implementing said methods.

### BACKGROUND ART

A Very Long Instruction Word (VLIW) processor is capable of executing many operations within one clock cycle. Generally, a compiler reduces program instructions into basic operations that the processor can perform simultaneously. The operations to be performed simultaneously are combined into a very long instruction word (VLIW). The instruction decoder of the VLIW processor decodes and issues the basic operations comprised in a VLIW each to a respective processor data-path element. Alternatively, the VLIW processor has no instruction decoder, and the operations comprised in a VLIW are directly issued each to a respective processor data-path element. Subsequently, these processor data-path elements execute the operations in the VLIW in parallel. This kind of parallelism, also referred to as instruction level parallelism (ILP), is particularly suitable for applications which involve a large amount of identical calculations, as can be found e.g. in media processing. Other applications comprising more control-oriented operations, e.g. for servo control purposes, are not suitable for programming as a VLIW program. However, often these kinds of programs can be reduced to a plurality of program threads that can be executed independently of each other. The execution of such threads in parallel is also denoted as thread-level parallelism (TLP). A VLIW processor is, however, not suitable for executing a program using thread-level parallelism. Exploiting the latter type of parallelism requires that sub-sets of processor data-path elements have an independent control flow, i.e. that they can access their own programs in a sequence independent of each other, e.g. they are capable of independently performing conditional branches. The data-path elements in a VLIW processor, however, all execute a sequence of instructions in the same order. The VLIW processor can, therefore, only execute one thread.

However, WO 01/67234 discloses a VLIW processing system configured as a single processing pipeline or as multiple processing pipelines, each processing pipeline comprising one or more processing paths for processing instructions. Thus, a single processing pipeline can function as a single pipeline with a single processing path for processing one instruction at a time, as a single pipeline having multiple processing paths for processing multiple instructions independently, or as a single VLIW pipeline having multiple processing paths for processing multiple sub-instructions in a single VLIW instruction word. Similarly, a multi-pipeline processing system can function as multiple autonomous processing systems of as one or more synchronized VLIW processing systems. This enables an operating system to dynamically choose between a synchronized VLIW operation or a parallel multi-thread or multi-strand paradigm.

A. Wolfe et al. in 'A Variable Instruction Stream Extension to the VLIW Architecture', Computer Architecture News 19 (1991), April, No. 2, pages 2-14, disclose a variable instruction stream processor architecture (XIMD), in which the number of processed streams can vary from cycle to cycle. Compared with a VLIW, the XIMD architecture comprises a separate instruction sequencer for every functional unit, which enables the dynamic grouping of functional units to process instruction streams of different sizes.

To control the operations in the data pipeline of a VLIW processor, two different mechanisms are commonly used: data-stationary and time-stationary. In the case of data-stationary encoding, every instruction that is part of the processor's instruction-set controls a complete sequence of operations that have to be executed on a specific data item, as it traverses the data pipeline. Once the instruction has been fetched from program memory and decoded, the processor controller hardware will make sure that the composing operations are executed in the correct machine cycle. In the case of time-stationary coding, every instruction that is part of the processor's instruction-set controls a complete set of operations that have to be executed in a single machine cycle. These operations may be applied to several different data items traversing the data pipeline. In this case it is the responsibility of the programmer or compiler to set up and maintain the data pipeline. The resulting pipeline schedule is fully visible in the machine code program. Time-stationary encoding is often used in application-specific processors, since it saves the overhead of hardware necessary for delaying the control information present in the instructions, at the expense of larger code size.

### DISCLOSURE OF THE INVENTION

It is an object of the invention to provide a processor that is capable of exploiting both instruction-level parallelism as thread-level parallelism or a combination thereof, during execution of an application.

For that purpose, a processor according to the invention comprises a plurality of processing elements, the plurality of processing elements comprising a first set of processing elements and at least a second set of processing elements;
wherein each processing element of the first set comprises a register file and at least one instruction issue slot, the instruction issue slot comprising at least one functional unit, and the processing element being arranged to execute instructions under a common thread of control; wherein each processing element of the second set comprises a register file and a plurality of instruction issue slots, each instruction issue slot comprising at least one functional unit, and the processing element being arranged to execute instructions under a common thread of control;
and wherein the number of instruction issue slots in the processing elements of the second set is substantially higher than the number of instruction issue slots in the processing elements of the first set;
and wherein the processing system further comprises inter-processor communication means arranged for communicating between processing elements of the plurality of processing elements. The computation means can comprise adders, multipliers, means for performing logical operations, e.g. AND, OR, XOR etc., lookup table operations, memory accesses, etc.

A processor according to the present invention allows exploiting both instruction-level parallelism and thread-level parallelism in an application, and a combination thereof. In case a program has a large degree of instruction-level parallelism, the application can be mapped onto one or more processing elements of the second set of processing elements. These processing elements have multiple issue slots allowing the execution of multiple instructions in parallel under one thread of control, and are therefore suited for exploiting instruction-level parallelism. If a program has a large degree of thread-level parallelism, but a low degree of instruction-level parallelism, the application can be mapped onto the processing elements of the first set of processing elements. These processing elements have a relatively lower number of issue slots allowing the mostly sequential execution of a series of instructions under one thread of control. By mapping each thread on such a processing element, several threads of control can be present in parallel. In case a program has a large degree of thread-level parallelism, and one or more threads have a large degree of instruction-level parallelism, the application can be mapped onto a combination of processing elements of the first set as well the second set of processing elements. Processing elements of the first set allow execution of threads consisting of a mostly sequential series of instructions, while processing elements of the second set allow execution of threads having instructions that can be executed in parallel. As a result, the processor according to the invention can exploit both instruction-level parallelism as well as thread-level parallelism, depending on the type of application that has to be executed.

"Architecture and Implementation of a VLIW Supercomputer" by Colwell et al., in Proc. of Supercomputing 1990, p.p. 910 - 919, describe a VLIW processor, which can either be configured as two 14-operations-wide processor, each independently controlled by a respective controller, or one 28-operations-wide processor controlled by one controller. EP0962856 discloses a Very Large Instruction Word processor, including plural program counters, and is selectively operable in either a first or a second mode. In the first mode, the data processor executes a single instruction stream. In the second mode, the data processor executes two independent program instruction streams simultaneously. Said documents, however, do neither disclose the principle of a processor array with a number of processing elements executing threads in parallel, said threads varying from having no instruction-level parallelism to a large degree of instruction-level parallelism, nor does it disclose how such a processor array could be realized.

An embodiment of the invention is **characterized in that** the processing elements of the plurality of processing elements are arranged in a network, wherein a processing element of the first set is arranged for direct communication with a processing element of only the second set, via the inter-processor communication means; and wherein a processing element of the second set is arranged for direct communication with a processing element of only the first set, via the inter-processor communication means. In practical applications, functions that have a large degree of instruction-level parallelism and functions having a low degree of instruction-level parallelism will be interleaved. By choosing an architecture in which processing elements of the first type and second type are interleaved as well, an efficient mapping of the application onto the processing system is allowed.

An embodiment of the invention is **characterized in that** the inter-processor communication means comprise a data-driven synchronized communication means. By using a data-driven synchronization mechanism to govern communication across the processing elements, it can be guaranteed that no data is lost during communication.

An embodiment of the invention is **characterized in that** the processing elements of the plurality of processing elements are arranged to be bypassed by the inter-processor communication means. An advantage of this embodiment is that it increases the flexibility of mapping the application onto the processing system. Depending on the degree of instruction-level parallelism as well as task-level parallelism of the application, one or more processing elements may not be used during execution of the application.

Further embodiments of the invention are described in the dependent claims. According to the invention a method for programming said processing system, as well as a compiler program product being arranged for implementing all steps of said method for programming a processing system, when said compiler program product is run on a computer system, are claimed as well.

### BRIEF DESCRIPTION OF THE DRAWINGS

Figure 1 shows a schematic diagram of a processing system according to the invention.
Figure 2 shows an example of a processing element of the second set of processing elements in more detail.
Figure 3 shows an example of a processing element of the first set of processing elements in more detail.
Figure 4 shows an example of the data-path connection between processing elements in more detail.
Figure 5 shows the application graph of an application to be executed by a processing system according to the invention.

### DESCRIPTION OF PREFERRED EMBODIMENTS

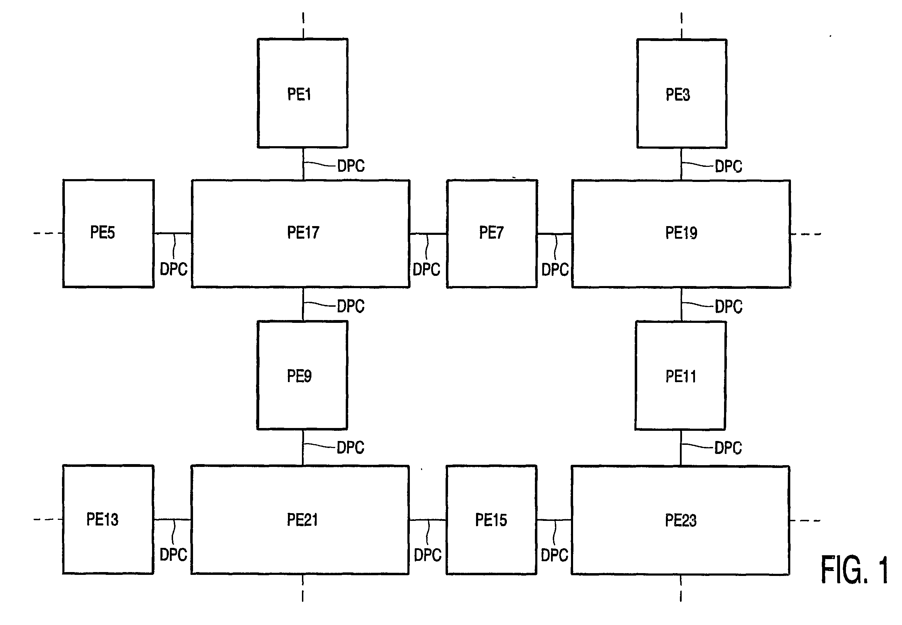

Figure 1 schematically shows a processing system according to the invention. The processing system comprises a plurality of processing elements PE1 - PE23, having a first set of processing elements PE1 -PE15, and a second set of processing elements PE17 - PE23. The processing elements can exchange data via data-path connections DPC. In the preferred embodiment shown in Figure 1, the processing elements are arranged such that between two processing elements of the first set, there is one processing element of the second set, and vice versa, and the data-path connections provide for data exchange between neighboring processing elements. Non-neighboring processing elements may exchange data by transferring it via a chain of mutually neighboring processing elements. Alternatively, or in addition, the processor system may comprise one or more global busses spanning sub-sets of the plurality of processing elements, or point-to-point connections between any pair of processing elements. Alternatively, the processing system may comprise more or less processing elements, or more than two different sets of processing elements, such that processing elements in the different sets comprise different numbers of issue slots, therefore supporting different levels of instruction-level parallelism per set.

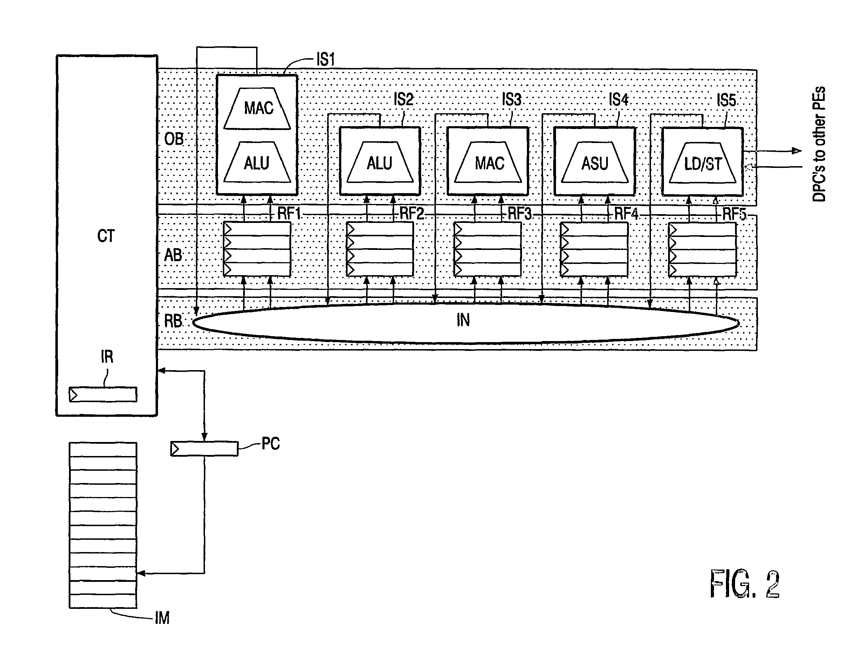

Figure 2 shows an example of a processing element of the second set of processing elements PE17 - PE23 in more detail. Each processing element of the second set of processing elements comprises two or more issues slots (ISs), and one ore more register files (RFs), each issue slot comprising one or more functional units. The processing element in Figure 2 comprises five issue slots IS1-IS5, and six functional units: two arithmetic and logic units (ALU), two multiply-accumulate units (MAC), an application-specific unit (ASU), and a load/store unit (LD/ST). The processing element also comprises five register files RF1-RF5. Issue slot S1 comprises two functional units: an ALU and a MAC. Functional units in a common issue slot share read ports from a register file and write ports to an interconnect network IN. In an alternative embodiment, a second interconnect network could be used in between register file and operation issue slots. The functional unit(s) in an issue slot have access to at least one register file associated with said issue slot. In Figure 2, there is one register file associated with each issue slot. Alternatively, more than one issue slot could be connected to a single register file. Yet another possibility is that multiple, independent register files are connected to a single issue slot, e.g. one different RF for each separate read port of a functional unit in the issue slot. The data path connections DPC between different processing elements are preferably driven from the load/store unit (LD/ST) in the respective processing element, so that communications across processing elements can be managed as memory transactions. Preferably, a different load/store unit (LD/ST) is used in association with the different data-path connections (DPC) connecting the processing element to other processing elements. This way, if the processing element is directly connected to e.g. four other processing elements, then four different load/store units are preferably used for communication with those processing elements, not shown in Figure 2. In addition, further load/store units could be added to the data-path of a processing element, and associated to data memories (e.g. RAM), either local to the processing element, or system-level memories, not shown in Figure 2. The functional units are controlled by a controller CT that has access to an instruction memory IM. A program counter PC determines the current instruction address in the instruction memory IM. The instruction pointed to by said current address is first loaded into an internal instruction register IR in the controller. The controller CT then controls data-path elements (functional units, register files, interconnect network) to perform the operations specified by the instruction stored in the instruction register IR. To do so, the controller communicates to the functional units via an opcode-bus OB, e.g. providing operation codes to the functional units, to the register files via an address-bus AB, e.g. providing addresses for reading and writing registers in the register file, and to the interconnect network IN through a routing-bus RB, e.g. providing routing information to the interconnect multiplexers. Processing elements of the second set comprise multiple issue slots, which allow exploiting instruction-level parallelism within a thread. For example, application functions with inherent instruction-level parallelism such as Fast Fourier Transforms, Discrete Cosine Transforms and Finite Impulse Response filters can be mapped onto processing elements of the second set.

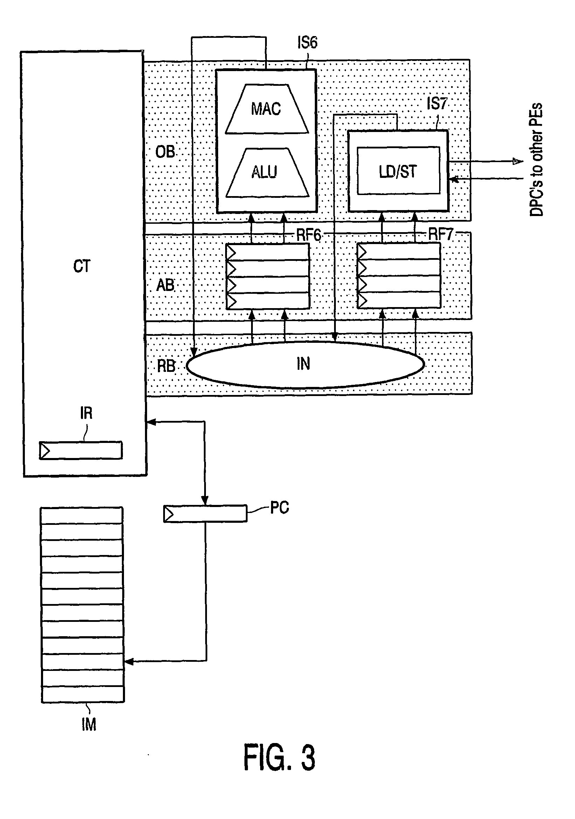

Figure 3 shows an example of a processing element of the first set of processing elements PE1 - PE15 in more detail. A processing element of the first set of processing elements comprises a relatively low number of issue slots, compared to processing elements of the second set of processing elements. A processing element of the first set further comprises one or more register files and a controller. The issue slots comprise one or more functional units, for example an arithmetic and logic unit, a multiply-accumulate unit or an application-specific unit. The processing element in Figure 3 comprises two issue slots IS6 and IS7 and two register files RF6 and RF7. Issue slot IS6 comprises two functional units: an ALU and a MAC. Functional units in a common issue slot share read ports from a register file and write ports to an interconnect network IN. Issue slot IS7 comprises a load/store unit (LD/ST) that drives the data-path connections (DPC) connecting the processing element with other processing element(s). Preferably, a different load/store unit (LD/ST) is used in association with the data-path connections (DPC) connecting the processing element directly to other processing elements. This way, if the processing element is directly connected to e.g. four other processing elements, then four different load/store units are preferably used for communication with those processing elements, not shown in Figure 3. In addition, further load/store (LD/ST) units could be added to the data-path of a processing element, and associated to data memories (e.g. RAM), either local to the processing element, or system-level memories, not shown in Figure 3. In an alternative embodiment, a second interconnect network could be used in between register file and operation issue slots. The functional unit(s) in an issue slot have access to at least one register file associated with said issue slot. In Figure 3, there is one register file associated with issue slot IS6, and another register file associated with issue slot IS7. Alternatively, independent register files are connected to the issue slot, e.g. one different RF for each separate read port of a functional unit in the issue slot. The functional units are controlled by a controller CT that has access to an instruction memory IM. A program counter PC determines the current instruction address in the instruction memory IM. The instruction pointed to by said current address is first loaded into an internal instruction register IR in the controller. The controller CT then controls data-patli elements (functional units, register files, interconnect network) to perform the operations specified by the instruction stored in the instruction register IR To do so, the controller communicates to the functional units via an opcode-bus OB, e.g. providing operation codes to the functional units, to the register files via an address-bus AB, e.g. providing addresses for reading and writing registers in the register file, and to the interconnect network IN through a routing-bus RB, e.g. providing routing information to the interconnect multiplexers. Processing elements of the first set have a relatively lower number of issue slots and are therefore suitable for computing inherently sequential functions, for example Huffman coding.

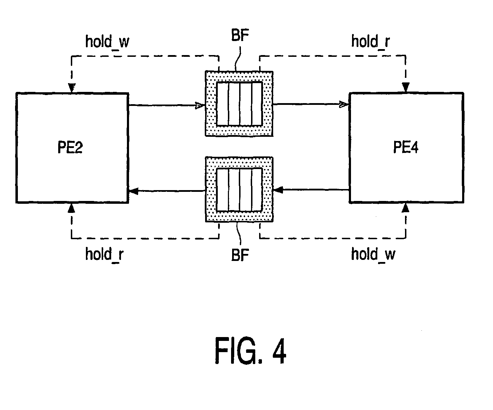

Figure 4 shows an example of the data-path connection DPC between processing elements in more detail. In a preferred embodiment, the data-path connections use a data-driven synchronization mechanism, in order to prevent that data is lost during communication between processing elements. The data-path connection between processing elements PE2 and PE4, shown in Figure 4, comprises two blocking First-In-First-Out (FIFO) buffers BF. The FIFO buffers BF are controlled by control signals hold_w and hold_r. In case processing element PE2 or PE4 is trying to write data to a FIFO buffer BF that is full, the signal hold_w is activated, halting the entire processing element until another processing element reads at least one data element from that FIFO buffer, freeing up storage space in that FIFO buffer. In that case the hold_w signal is deactivated. A clock-gating mechanism can be used to halt the processing element from writing data to a full FIFO buffer, using the hold_w signal, as long as that FIFO buffer is full. In case a processing element PE2 or PE4 tries to read a value from a FIFO buffer that is empty, the hold_r signal is activated, halting the entire processing element until another processing element writes at least one data element into the FIFO buffer. At that moment the hold_r signal is deactivated and the processing element that was halted can start reading data from said FIFO buffer again. A clock-gating mechanism can be used to halt a processing element from reading data from an empty FIFO buffer, using the hold_r signal, as long as that FIFO buffer is empty.

In a preferred embodiment, processing elements in both sets are VLIW processors, wherein processing elements of the second set are wide VLIW processors, i.e. VLIW processors with many issue slots, while processing elements of the first set are narrow VLIW processors, i.e. VLIW processors with a small number of issue slots. In an alternative embodiment, processing elements of the second set are wide VLIW processors with many issue slots, and processing elements of the first set are single-issue slot Reduced Instruction Set Computer (RISC) processors A wide VLIW processor with many issue slots allows exploiting instruction-level parallelism in a thread running on that processor, while a single-issue slot RISC processor, or a narrow VLIW processor with few issue slots, can be designed to efficiently execute a series of instructions sequentially. In practice, an application often comprises a series of threads that can be executed in parallel, where some threads are very poor in instruction-level parallelism, and some threads inherently have a large degree of instruction-level parallelism. During compilation of such an application, the application is analyzed and different threads that can be executed in parallel are identified. Furthermore, the degree of instruction-level parallelism within a thread is determined as well. This application can be mapped onto a processing system according to the invention as follows. Threads that have a large degree of instruction-level parallelism are mapped onto the wide VLIW processors, while threads that are very poor in instruction-level parallelism, or have no instruction-level parallelism at all, are mapped onto the single-issue slot RISC processors, or the narrow VLIW processors. Communication between the different threads is mapped onto the data-path connections DPC, as shown in Figure 1. As a result an efficient execution of the application is allowed: multiple threads are executed in parallel, while simultaneously instruction-level parallelism within a thread can be exploited. Therefore, a processing system according to the invention can exploit both instruction-level parallelism as well as thread-level parallelism present in an application. In addition, the present invention has the advantage of allowing for a proper match between the computational characteristics of a thread, and those of the processing element it is mapped onto. This way, an inherently sequential function like Huffman decoding is not mapped onto a wide VLIW processor, wasting architecture resources that go unused due to the lack of instruction-level parallelism, but is mapped instead onto a small RISC processor that fits its computational patterns, the wide VLIW processor remaining available for other functions.

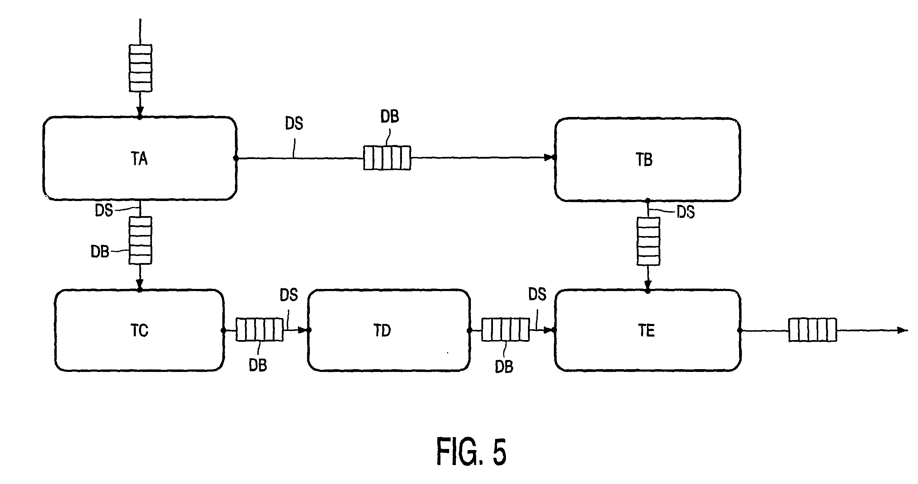

Figure 5 shows the application graph of an application that has to be executed by a processing system shown in Figure 1. Referring to Figure 5, the application comprises five threads TA, TB, TC, TD and TE. These five threads can be executed in parallel. Threads TA, TB, TC and TE have a large degree of instruction-level parallelism, while thread TD has no instruction-level parallelism. The threads exchange data via data streams DS, and these data streams are buffered by data buffers DB. When mapping the application onto the processing system, the threads TA, TB, TC and TE are mapped each onto one of the processing elements PE17 - PE23, respectively, and thread TD is mapped onto one of the processing elements PE1 - PE15. One alternative is to map thread TA onto processing element PE17, thread TB onto processing element PE19, thread TC onto processing element PE21, thread TD onto processing element PE15 and thread TE onto processing element PE23. In this case the threads TC, TD and TE are mapped onto processing elements that are directly connected via data-path connections DPC, i.e. processing element PE21 directly communicates with processing element PE15, and processing element PE15 directly communicates with processing element PE23. For threads TA and TB this is not the case, since processing element PE17 7 has to communicate with processing elements PE19 and PE21, which are indirectly coupled to PE17 via PE7 and PE9, respectively. Likewise, processing element PE19 has to communicate with processing element PE23, which is indirectly coupled to PE19 via PE11. In these cases the processing elements PE7, PE9 and PE11 can be by-passed in order to allow a direct communication between the processing elements. The data-streams DS are mapped onto data-path connections DPC, and the data-buffers DB are mapped onto a FIFO buffer BF, as shown in Figure 4. In different embodiments, the application graph may comprise more or less threads, as well as a different ratio between threads having a large degree of instruction-level parallelism and a low degree of instruction-level parallelism.

In a preferred embodiment, as shown in Figure 1, the processing elements of the first and the second set are interleaved, i.e. a processing element of the first set is arranged for direct communication with a processing element of only the second set, and a processing element of the second set is arranged for direct communication with a processing element of only the first set. As a result, there is never a penalty of more than one by-passed processing element for communication between two threads executing on different processing elements.

The degree of instruction-level parallelism and thread-level parallelism that can be exploited will vary from one application to the other, varying from applications having a low degree of thread-level parallelism wherein each thread has a high degree of instruction-level parallelism, to applications having a large degree of thread-level parallelism wherein each thread has no instruction-level parallelism. The flexibility of a processing system as shown in Figure 1 allows to map the whole range of applications onto the processing system, by by-passing processing elements onto which no thread can be mapped.

Referring to Figure 2, the interconnect network IN is a fully connected network, i.e. all functional units are coupled to all register files RF1, RF2, RF3, RF4 and RF5. Alternatively, the interconnect network IN can be a partially connected network, i.e. not every functional unit is coupled to all register files. In case of a large number of functional units, the overhead of a fully connected network will be considerable in terms of silicon area and power consumption. During design of the VLIW processor it is decided to which degree the functional units are coupled to the register file segments, depending on the range of applications that has to be executed by the processing system.

Referring again to Figure 2, the processing element comprises a distributed register file, i.e. register files RF1, RF2, RF3, RF4 and RF5. Alternatively, the processing element may comprise a single register file for all functional units. In case the number of functional units of a VLIW processor is relatively small, the overhead of a single register file is relatively small as well.

In an alternative embodiment, the processing elements of the second set comprise a superscalar processor. A superscalar processor also comprises multiple execution units that can perform multiple operations in parallel, as in case of a VLIW processor. However, the processor hardware itself determines at runtime which operation dependencies exist and decides which operations to execute in parallel based on these dependencies, while ensuring that no resource conflicts will occur. The principles of the embodiments for a VLIW processor, described in this section, also apply for a superscalar processor. In general, a VLIW processor may have more execution units in comparison to a superscalar processor. The hardware of a VLIW processor is less complicated in comparison to a superscalar processor, which results in a better scalable architecture. The number of execution units and the complexity of each execution unit, among other things, will determine the amount of benefit that can be reached using the present invention.

In other embodiments of a processing system according to the invention, the processing system may comprise more or less processing elements than the processing system shown in Figure 1. Alternatively, the processing elements may be arranged differently, for example in a one-dimensional network, or not in an interleaved fashion, i.e. between two processing elements of the first set more than one processing element of the second set is located, and vice versa. The architecture of the processing system may depend on the range of applications that is expected to be executed on the processing system, for example the amount of thread-level parallelism that range of applications has relative to the amount of instruction-level parallelism.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A processing system comprising a plurality of processing elements, the plurality of processing elements comprising a first set of processing elements (PE1-PE15) and at least a second set of processing elements (PE16-PE23),
wherein each processing element of the first set comprises a register file (RF6, RF7) and at least one instruction issue slot (IS6, IS7), the instruction issue slot comprising at least one functional unit (ALU, MAC), and the processing element being arranged to execute instructions under a common thread of control (CT), wherein each processing element of the second set comprises a register file (RF1-RF5) and a plurality of instruction issue slots (IS1-IS5), each instruction issue slot comprising at least one functional unit (ALU, MAC, ASU, LD/ST), and the processing element being arranged to execute instructions under a common thread of control (CT), wherein the processing system further comprises inter-processor communication means (DPC) arranged for communicating between processing elements of the plurality of processing elements;
**characterized in that** the number of instruction issue slots in the processing elements of the second set is higher than the number of instruction issue slots in the processing elements of the first set.

2. A processing system according to claim 1, **characterized in that** the processing elements of the plurality of processing elements are arranged in a network (IN), wherein a processing element of the first set is arranged for direct communication with a processing element of only the second set, via the inter-processor communication means,
and wherein a processing element of the second set is arranged for direct communication with a processing element of only the first set, via the inter-processor communication means.

3. A processing system according to claim 1, **characterized in that** the plurality of issue slots organized in a processing element of the second set of processing elements share at least one common control signal for controlling instruction execution.

4. A processing system according to claim 1, **characterized in that** the processing elements of the first set of processing elements are arranged for issuing only one operation per cycle.

5. A processing system according to claim 1, **characterized in that** the processing elements of the second set of processing elements are Very Large Instruction Word processors, wherein the register file is accessible for said processing elements by the corresponding functional units and wherein the processing elements further comprise a local communication network for coupling the register file and the corresponding functional units.

6. A processing system according to claim 1, **characterized in that** the processing elements of the first set of processing elements are Very Large Instruction Word processors, wherein the register file is accessible for said processing elements by the corresponding functional units and wherein the processing elements further comprise a local communication network for coupling the register file and the corresponding functional units.

7. A processing system according to claim 5 or 6, **characterized in that** the register file corresponding to a processing element is a distributed register file.

8. A processing system according to claim 5 or 6, **characterized in that** the local communication network corresponding to a processing element is a partially connected communication network.

9. A processing system according to claim 1, **characterized in that** the inter-processor communication means comprise a data-driven synchronized communication means.

10. A processing system according to claim 9, **characterized in that** the data-driven synchronized communication means comprise a blocking First-In-First-Out buffer (BF).

11. A processing system according to claim 1, **characterized in that** the plurality of processing elements comprises a first processing element coupled to a second processing element via a further processing element, said further processing element being arranged to be bypassed by the inter-proccssor communication means when the first processing element requires communication with the second processing element.

12. A method for programming a processing system, wherein the processing system comprises a plurality of processing elements, the plurality of processing elements comprising a first set of processing elements (PE1-PE15) and at least a second set of processing elements (PE16-PE23),
wherein each processing element of the first set comprises a register file (RF6, RF7) and at least one instruction issue slot (IS6, IS7), the instruction issue slot comprising at least one functional unit (ALU, MAC), and the processing element being arranged to execute instructions under a common thread of control (CT),
wherein each processing element of the second set comprises a register file (RF1-RF5) and a plurality of instruction issue slots (IS1-IS5), each instruction issue slot comprising at least one functional unit (ALU, MAC, ASU, LD/ST), and the processing element being arranged to execute instructions under a common thread of control (CT),
wherein the number of instruction issue slots in the processing elements of the second set is higher than the number of instruction issue slots in the processing element of the first set, and
the processing system further comprises inter-processor communication means (DPC) arranged for communicating between processing elements of the plurality of processing elements,
and wherein the method of programming the processing system comprises the following steps:
- identifying a first set of functions in an application graph wherein each function inherently contains instructions to be executed mainly sequentially,
- identifying a second set of functions in an application graph wherein each function inherently contains instruction-level parallelism,
- mapping the first set of functions onto processing elements of the first set of processing elements,
- mapping the second set of functions onto processing elements of the second set of processing elements.

13. A method for programming a processing system according to claim 12,
wherein the plurality of processing elements comprises a first processing element coupled to a second processing element via a further processing element, **characterized in that** the method further comprises the step of:
- bypassing the further processing element by the inter-processor communication means when the first processing element requires communication with the second processing element.

14. A compiler program product being arranged for implementing all steps of the method for programming a processing system according to claim 12 or 13, when said compiler program product is run on a computer system.

## Patentansprüche

1. Rechnersystem mit einer Vielzahl von Rechenelementen, wobei diese vielen Rechenelemente einen ersten Satz Rechenelemente (PE1-PE15) und wenigstens einen zweiten Satz Rechenelemente (PE16-PE23) umfassen,
wobei jedes Rechenelement des ersten Satzes ein Registerdatei (RF6, RF7) und wenigstens einen Instruktionserstellungsschlitz (IS6, IS7) aufweist, wobei der Instruktionserstellungsschlitz wenigstens eine funktionelle Einheit (ALU, MAC) aufweist, und wobei das Rechenelement dazu vorgesehen ist, unter einem gemeinsamen Steuerdraht (CT) Instruktionen durchzuführen, wobei jedes Rechenelement des zweiten Satzes eine Registerdatei (RF1-RF5) und eine Vielzahl Instruktionserstellungsschlitze (IS1-IS5) aufweist, wobei jeder Instruktionserstellungsschlitz wenigstens eine funktionelle Einheit (ALU, MAC, ASU, LD/ST) aufweist und wobei das Rechenelement dazu vorgesehen ist, unter einem gemeinsamen Steuerdraht (CT) Instruktionen durchzuführen, wobei das Rechnersystem weiterhin Zwischenprozessorkommunikationsmittel (DPC) aufweist, vorgesehen zur Kommunikation zwischen Rechenelementen der vielen Rechenelemente; **dadurch gekennzeichnet, dass** die Anzahl Instruktionserstellungsschlitze in den Rechenelementen des zweiten Satzes höher ist als die Anzahl Instruktionserstellungsschlitze in den Rechenelementen des ersten Satzes.

2. Rechnersystem nach Anspruch 1, **dadurch gekennzeichnet, dass** die Rechenelemente der Vielzahl von Rechenelementen in einem Netzwerk (IN) vorgesehen sind, wobei ein Rechenelement des ersten Satzes zur direkten Kommunikation mit einem Rechenelement nur des zweiten Satzes vorgesehen ist, und zwar über die Zwischenprozessorkommunikationsmittel,
und wobei ein Rechenelement des zweiten Satzes zur direkten Kommunikation mit einem Rechenelement nur des ersten Satzes vorgesehen ist, und zwar über die Zwischenprozessorkommunikationsmittel.

3. Rechnersystem nach Anspruch 1, **dadurch gekennzeichnet, dass** die Vielzahl in einem Rechenelement des zweiten Satzes von Rechenelementen organisierter Erstellungsschlitze sich wenigstens ein gemeinsames Steuersignal zur Steuerung der Instruktionsdurchführung teilen.

4. Rechnersystem nach Anspruch 1, **dadurch gekennzeichnet, dass** die Rechenelemente des ersten Satzes von Rechenelementen zum Erstellen nur eines Vorgangs je Zyklus vorgesehen sind.

5. Rechnersystem nach Anspruch 1, **dadurch gekennzeichnet, dass** die Rechenelemente des zweiten Satzes von Rechenelementen Großinstruktionswortrechner sind, wobei die genannten Rechenelemente durch die entsprechenden funktionellen Einheiten auf die Registerdatei zugreifen können und wobei die Rechenelemente weiterhin zur Kopplung der Registerdatei und der entsprechenden funktionellen Einheiten ein örtliches Kommunikationsnetzwerk aufweisen.

6. Rechnersystem nach Anspruch 1, **dadurch gekennzeichnet, dass** die Rechenelemente des ersten Satzes von Rechenelementen Großinstruktionswortrechner sind, wobei die genannten Rechenelemente durch die entsprechenden funktionellen Einheiten auf die Registerdatei zugreifen können und wobei die Rechenelemente weiterhin zur Kopplung der Registerdatei und der entsprechenden funktionellen Einheiten ein örtliches Kommunikationsnetzwerk aufweisen.

7. Rechnersystem nach Anspruch 5 oder 6, **dadurch gekennzeichnet, dass** die mit einem Rechenelement übereinstimmende Registerdatei eine verteilte Registerdatei ist.

8. Rechnersystem nach Anspruch 5 oder 6, **dadurch gekennzeichnet, dass** das mit einem Rechenelement übereinstimmende örtliche Kommunikationsnetzwerk ein teilweise verbundenes Kommunikationsnetzwerk ist.

9. Rechnersystem nach Anspruch 1, **dadurch gekennzeichnet, dass** die Zwischenrechnerkommunikationsmittel ein datenbetriebenes synchronisiertes Kommunikationsmittel aufweisen.

10. Rechnersystem nach Anspruch 9, **dadurch gekennzeichnet, dass** die datenbetriebenen synchronisierten Kommunikationsmittel einen sperrenden FIFO-Puffer (BF) aufweisen.

11. Rechnersystem nach Anspruch 1, **dadurch gekennzeichnet, dass** die Vielzahl Rechenelemente ein über ein weiteres Rechenelement mit einem zweiten Rechenelement gekoppeltes erstes Rechenelement aufweisen, wobei das genannte weitere Rechenelement dazu vorgesehen ist, von dem Zwischenrechnerkommunikationsmittel umgangen zu werden, wenn das erste Rechenelement Kommunikation mit dem zweiten Rechenelement erfordert.

12. Verfahren zum Programmieren eines Rechnersystems, wobei das Rechnersystem eine Vielzahl von Rechenelementen umfasst, wobei diese vielen Rechenelemente einen ersten Satz Rechenelemente (PE1-PE15) und wenigstens einen zweiten Satz Rechenelemente (PE16-PE23) umfassen,
wobei jedes Rechenelement des ersten Satzes ein Registerdatei (RF6, RF7) und wenigstens einen Instruktionserstellungsschlitz (IS6, IS7) aufweist, wobei der Instruktionserstellungsschlitz wenigstens eine funktionelle Einheit (ALU, MAC) aufweist, und wobei das Rechenelement dazu vorgesehen ist, unter einem gemeinsamen Steuerdraht (CT) Instruktionen durchzuführen, wobei jedes Rechenelement des zweiten Satzes eine Registerdatei (RF1-RF5) und eine Vielzahl Instruktionserstellungsschlitze (IS1-IS5) aufweist, wobei jeder Instruktionserstellungsschlitz wenigstens eine funktionelle Einheit (ALU, MAC, ASU, LD/ST) aufweist und wobei das Rechenelement dazu vorgesehen ist, unter einem gemeinsamen Steuerdraht (CT) Instruktionen durchzuführen, wobei die Anzahl Instruktionserstellungsschlitze in den Rechenelementen des zweiten Satzes höher ist als die Anzahl Instruktionserstellungsschlitze in den Rechenelementen des ersten Satzes und wobei das Rechnersystem weiterhin Zwischenrechnerkommunikationsmittel (DPC) aufweist, vorgesehen zur Kommunikation zwischen Rechenelementen der Vielzahl von Rechenelementen und wobei das Verfahren zum Programmieren des Rechnersystems die nachfolgenden Verfahrensschritte umfasst:
- das Identifizieren eines ersten Satzes von Funktionen in einer Applikationsgraphik, wobei jede Funktion grundsätzlich Instruktionen enthält, die vorwiegend sequentiell durchgeführt werden sollen,
- das Identifizieren eines zweiten Satzes von Funktionen in einer Applikationsgraphik, wobei jede Funktion grundsätzlich eine Parallelität auf Befehlsebene enthält,
- das Zuordnen des ersten Satzes von Funktionen zu Rechenelementen des ersten Satzes von Rechenelementen,
- das Zuordnen des zweiten Satzes von Funktionen zu Rechenelementen des zweiten Satzes von Rechenelementen.

13. Verfahren zum Programmieren eines Rechnersystems nach Anspruch 12, wobei die Vielzahl von Rechenelementen ein über ein weiteres Rechenelement mit einem zweiten Rechenelement gekoppeltes erstes Rechenelement aufweist, **dadurch gekennzeichnet, dass** das Verfahren weiterhin den nachfolgenden Verfahrensschritt umfasst:
- das Umgehen des weiteren Rechenelementes durch das Zwischenrechnerkommunikationsmittel, wenn das erste Rechenelement Kommunikation mit dem zweiten Rechenelement erfordert.

14. Compilerprogrammprodukt vorgesehen zum Implementieren aller Schritte des Verfahrens zum Programmieren eines Rechnersystems nach Anspruch 12 oder 13, wenn das genannte Compilerprogrammprodukt in einem Computersystem verwendet wird.

## Revendications

1. Système de traitement comprenant une pluralité d'éléments de traitement, la pluralité d'éléments de traitement comprenant un premier jeu d'éléments de traitement (PE1 à PE15) et au moins un second jeu d'éléments de traitement (PE16 à PE23),
dans lequel chaque élément de traitement du premier jeu comprend un fichier de registre (RF6, RF7) et au moins une fente d'émission d'instruction (IS6, IS7), la fente d'émission d'instruction comprenant au moins une unité fonctionnelle (ALU, MAC), et l'élément de traitement étant agencé pour exécuter des instructions sous un fil commun de commande (CT), dans lequel chaque élément de traitement du second jeu comprend un fichier de registre (RF1 à RF5) et une pluralité de fentes d'émission d'instruction (IS1 à IS5), chaque fente d'émission d'instruction comprenant au moins une unité fonctionnelle (ALU, MAC, ASU, LD/ST), et l'élément de traitement étant agencé pour exécuter des instructions sous un fil commun de commande (CT), dans lequel le système de traitement comprend en outre des moyens de communication inter-processeur (DPC) agencés pour communiquer entre des éléments de traitement parmi la pluralité d'éléments de traitement ;
**caractérisé en ce que** le nombre de fentes d'émission d'instruction dans les éléments de traitement du second jeu est supérieur au nombre de fentes d'émission d'instruction dans les éléments de traitement du premier jeu.

2. Système de traitement selon la revendication 1, **caractérisé en ce que** les éléments de traitement parmi la pluralité d'éléments de traitement sont agencés dans un réseau (IN), dans lequel un élément de traitement du premier jeu est agencé pour une communication directe avec un élément de traitement seulement du second jeu, par l'intermédiaire des moyens de communication inter-processeur,
et dans lequel un élément de traitement du second jeu est agencé pour une communication directe avec un élément de traitement seulement du premier jeu, par l'intermédiaire des moyens de communication inter-processeur.

3. Système de traitement selon la revendication 1, **caractérisé en ce que** la pluralité de fentes d'émission organisées dans un élément de traitement du second jeu d'éléments de traitement partagent au moins un signal de commande commun pour commander une exécution d'instruction.

4. Système de traitement selon la revendication 1, **caractérisé en ce que** les éléments de traitement du premier jeu d'éléments de traitement sont agencés pour émettre seulement une opération par cycle.

5. Système de traitement selon la revendication 1, **caractérisé en ce que** les éléments de traitement du second jeu d'éléments de traitement sont des processeurs à très long mot d'instruction, dans lequel le fichier de registre est accessible pour lesdits éléments de traitement par les unités fonctionnelles correspondantes et dans lequel les éléments de traitement comprennent en outre un réseau de communication local pour coupler le fichier de registre et les unités fonctionnelles correspondantes.

6. Système de traitement selon la revendication 1, **caractérisé en ce que** les éléments de traitement du premier jeu d'éléments de traitement sont des processeurs à très long mot d'instruction, dans lequel le fichier de registre est accessible pour lesdits éléments de traitement par les unités fonctionnelles correspondantes et dans lequel les éléments de traitement comprennent en outre un réseau de communication local pour coupler le fichier de registre et les unités fonctionnelles correspondantes.

7. Système de traitement selon la revendication 5 ou 6, **caractérisé en ce que** le fichier de registre correspondant à un élément de traitement est un fichier de registre distribué.

8. Système de traitement selon la revendication 5 ou 6, **caractérisé en ce que** le réseau de communication local correspondant à un élément de traitement est un réseau de communication partiellement connecté.

9. Système de traitement selon la revendication 1, **caractérisé en ce que** les moyens de communication inter-processeur comprennent des moyens de communication synchronisée dirigés par les données.

10. Système de traitement selon la revendication 9, **caractérisé en ce que** les moyens de communication synchronisée dirigés par les données comprennent une mémoire tampon premier entré premier sorti de blocage (BF).

11. Système de traitement selon la revendication 1, **caractérisé en ce que** la pluralité d'éléments de traitement comprend un premier élément de traitement couplé à un second élément de traitement par l'intermédiaire d'un élément de traitement supplémentaire, ledit élément de traitement supplémentaire étant agencé pour être évité par les moyens de communication inter-processeur lorsque le premier élément de traitement nécessite une communication avec le second élément de traitement.

12. Procédé pour programmer un système de traitement, dans lequel le système de traitement comprend une pluralité d'éléments de traitement, la pluralité d'éléments de traitement comprenant un premier jeu d'éléments de traitement (PE1 à PE15) et au moins un second jeu d'éléments de traitement (PE16 à PE23),
dans lequel chaque élément de traitement du premier jeu comprend un fichier de registre (RF6, RF7) et au moins un fente d'émission d'instruction (IS6, IS7), la fente d'émission d'instruction comprenant au moins une unité fonctionnelle (ALU, MAC), et l'élément de traitement étant agencé pour exécuter des instructions sous un fil commun de commande (CT),
dans lequel chaque élément de traitement du second jeu comprend un fichier de registre (RF1 à RF5) et une pluralité de fentes d'émission d'instruction (IS1 à IS5), chaque fente d'émission d'instruction comprenant au moins une unité fonctionnelle (ALU, MAC, ASU, LD/ST), et l'élément de traitement étant agencé pour exécuter des instructions sous un fil commun de commande (CT),
dans lequel le nombre de fentes d'émission d'instruction dans les éléments de traitement du second jeu est supérieur au nombre de fentes d'émission d'instruction dans l'élément de traitement du premier jeu,
et le système de traitement comprend en outre des moyens de communication inter-processeur (DPC) agencés pour communiquer entre des éléments de traitement parmi la pluralité d'éléments de traitement,
et dans lequel le procédé de programmation du système de traitement comprend les étapes suivantes consistant à :
- identifier un premier jeu de fonctions dans un graphe d'application dans lequel chaque fonction contient de façon inhérente des instructions destinées à être exécutées essentiellement de façon séquentielle,
- identifier un second jeu de fonctions dans un graphe d'application dans lequel chaque fonction contient de façon inhérente un parallélisme de niveau d'instruction,
- mapper le premier jeu de fonctions sur des éléments de traitement du premier jeu d'éléments de traitement,
- mapper le second jeu de fonctions sur des éléments de traitement du second jeu d'éléments de traitement.

13. Procédé pour programmer un système de traitement selon la revendication 12, dans lequel la pluralité d'éléments de traitement comprend un premier élément de traitement couplé à un second élément de traitement par l'intermédiaire d'un élément de traitement supplémentaire, **caractérisé en ce que** le procédé comprend en outre l'étape consistant à :
- éviter l'élément de traitement supplémentaire par les moyens de communication inter-processeur lorsque le premier élément de traitement nécessite une communication avec le second élément de traitement.

14. Produit-programme compilateur agencé pour implémenter toutes les étapes du procédé pour programmer un système de traitement selon la revendication 12 ou 13, lorsque ledit produit-programme compilateur est exécuté sur un système informatique.
